(19) Europäisches Patentamt
European Patent Office
Office européen des brevets

(11) **EP 2 570 689 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**22.09.2021   Patentblatt 2021/38**

(51) Int Cl.:
**F16D 55/226** $^{(2006.01)}$      **F16D 65/095** $^{(2006.01)}$

(45) Hinweis auf die Patenterteilung:
**12.08.2015   Patentblatt 2015/33**

(21) Anmeldenummer: **11181212.9**

(22) Anmeldetag: **14.09.2011**

(54) **Scheibenbremse eines Kraftfahrzeugs und Bremsbelag**

Disc brake of a motor vehicle and brake lining

Frein à disque d'un véhicule automobile et garniture de frein

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.03.2013   Patentblatt 2013/12**

(73) Patentinhaber: **KNORR-BREMSE Systeme für Nutzfahrzeuge GmbH**
**80809 München (DE)**

(72) Erfinder: **Iraschko, Johann**
**85301 Schweitenkirchen (DE)**

(74) Vertreter: **Dantz, Jan Henning**
**Loesenbeck - Specht - Dantz**
**Patent- und Rechtsanwälte**
**Am Zwinger 2**
**33602 Bielefeld (DE)**

(56) Entgegenhaltungen:
EP-A1- 0 641 949          EP-A1- 1 637 759
DE-A1- 3 205 001          DE-A1-102007 006 472
DE-A1-102008 013 514      GB-A- 2 056 602
US-A- 4 940 119           US-A- 6 039 155

EP 2 570 689 B2

**Beschreibung**

Die vorliegende Erfindung betrifft eine Scheibenbremse eines Kraftfahrzeugs gemäß dem Oberbegriff des Anspruchs 1.

Gattungsgemäße Scheibenbremsen bestehen im Wesentlichen aus einer Bremsscheibe, mindestens einen, in der Regel zwei Bremsbelägen, einem Bremssattel und einem Bremsträger.

Um eine sichere Funktion der Scheibenbremse zu gewährleisten, ist es erforderlich, die Bremsbeläge im Bremssattel bzw. den Bremsträger zuverlässig zu führen und zu fixieren.

Der Bremsträger weist dazu jeweils zwei in Umfangsrichtung der Bremsscheibe hintereinander angeordnete und durch eine Strebe miteinander verbundene Trägerhörner auf, die einen Belagschacht zur Aufnahme eines Bremsbelags seitlich begrenzen.

Die Bremsbeläge sind dabei einer Vielzahl von Beanspruchungen ausgesetzt. So sind die Bremsbeläge neben einer hohen thermischen Beanspruchung während eines Bremsvorgangs auch einer hohen mechanischen Belastung ausgesetzt. Dabei ergeben sich für die beiden Betriebszustände a) Bremse betätigt und b) Bremse unbetätigt, unterschiedliche Belastungszustände.

Bei Betätigung der Bremse wird der Bremsbelag hohen Druck- und Querkräften ausgesetzt, wobei der Bremsbelag die Aufgabe zu erfüllen hat, die an der Reibfläche des Bremsbelags erzeugte Querkräfte über die Reibmasse in eine Belagträgerplatte und von dort in den Bremssattel bzw. den Bremsträger einzuleiten. Die auf den Bremsbelag wirkenden Querkräfte werden dabei vor allem von dem auslaufseitigen Trägerhorn, also dem in Drehrichtung der Bremsscheibe vorderen Trägerhorn, aufgenommen.

Des Weiteren muss der Bremsbelag die vom Bremssattel erzeugte Zuspannkraft in eine möglichst gleichmäßig auf der Reibfläche verteilte Druckkraft verwandeln. Dazu muss die vom Bremssattel erzeugte Zuspannkraft mit Hilfe der biegesteifen Belagträgerplatte in eine Flächenlast umgewandelt werden.

Problematisch ist, dass wegen der begrenzten Bauraumgegebenheiten die am Bremsträger anliegenden stirnseitigen Schmalseiten oder Stützflächen der Belagträgerplatte bei einem Bremsvorgang eine Drehbewegung des Bremsbelags nicht verhindern können. Diese Drehbewegung kann sich negativ auf das Lüftspiel, d.h. den Freigang zwischen Reibbelag und Bremsscheibe sowie auf das Verschleißverhalten der Bremsbeläge, insbesondere in Form eines Schrägverschleißes und dem Freigang der Beläge auswirken.

Aus der GB 2 056 602 A ist eine Scheibenbremse mit einem Bremsbelag bekannt, bei der das einlaufseitige Trägerhorn des Bremsträgers der Scheibenbremse einen Vorsprung aufweist, der in eine Nut in der benachbarten Stützfläche der Belagträgerplatte eingreift, um eine solche Drehbewegung zu verhindern.

Zur Verhinderung dieser Drehbewegung ist es außerdem aus der EP 0 641 949 A1 und der EP 1 637 759 A1 bekannt, eine Druckplatte mit einer Drehsicherung in Form eines Stützfußes auszubilden, der sich im Bereich der Auslaufseite der Druckplatte nach unten in einen Aufnahmeschlitz im Bremsträger erstreckt.

Aufgabe der vorliegenden Erfindung ist es, eine Scheibenbremse der gattungsgemäßen Art derart weiter zu entwickeln, dass die oben beschriebenen negativen Auswirkungen auf das Betriebsverhalten weitgehend vermieden werden.

Diese Aufgabe wird durch eine Scheibenbremse mit den Merkmalen des Anspruchs 1 gelöst.

Erfindungsgemäß ist das auslaufseitige Trägerhorn des Bremsträgers gegenüber dem einlaufseitigen Trägerhorn des Bremsträgers abgesenkt ausgebildet. Durch diese konstruktive Ausbildung wird eine Drehbewegung des Bremsbelags während eines Bremsvorgangs vermieden Am Bremsbelag ergibt sich ein definiertes Drehmoment um eine zur Drehachse der Bremsscheibe parallele Z-Achse. Durch dieses Drehmoment wird auch einlaufseitig am Trägerhorn eine Abstützkraft erzeugt und somit auch diese Seite des Bremsträgers in den Kraftfluss während eines Bremsvorgangs miteinbezogen.

Als einlaufseitiges Trägerhorn wird dabei das in einer Hauptdrehrichtung der Bremsscheibe, also der Drehrichtung der Bremsscheibe während einer Vorwärtsfahrt des Kraftfahrzeugs, hintere Trägerhorn bezeichnet.

Vorteilhafte Ausführungsvarianten der Erfindung sind Gegenstand der Unteransprüche.

Gemäß einer Ausführungsvariante sind das auslaufseitige Trägerhorn des Bremsträgers und die diesem benachbarte Stützfläche der Belagträgerplatte derart geformt, dass die Belagträgerplatte auslaufseitig aus dem Bremsträger radial von der Drehachse der Bremsscheibe weg heraus schwenkbar ist. Dadurch ist gleichzeitig bei konstruktiver Ausgestaltung von Bremsträger und Belagträgerplatte zur Verhinderung einer Drehbewegung des Bremsbelags ein einfaches Ein- und Ausbauen des Bremsbelags ermöglicht. Der Ein- und Ausbau des Bremsbelags in dem Bremsträger kann hier in einfacher Weise durch eine Schwenkbewegung erfolgen.

Als auslaufseitiges Trägerhorn wird entsprechend das in einer Hauptdrehrichtung der Bremsscheibe, also der Drehrichtung der Bremsscheibe während einer Vorwärtsfahrt des Kraftfahrzeugs, vordere Trägerhorn bezeichnet.

Die dem einlaufseitigen Trägerhorn des Bremsträgers benachbarte Stützfläche der Belagträgerplatte weist gemäß einer vorteilhaften Ausführungsvariante einen Versatz auf, der in eine dem Versatz entsprechende Hinterschneidung am einlaufseitigen Trägerhorn eingreift.

Des Weiteren weist die dem auslaufseitigen Trägerhorn des Bremsträgers benachbarte Stützfläche der Belagträgerplatte einen das Trägerhorn zumindest teilweise übergreifenden Versatz auf.

Gemäß einer weiteren bevorzugten Ausführungsvariante ist die Belagträgerplatte durch die Ausbildung der jeweiligen Versätze asymmetrisch geformt. Auch dadurch ergeben sich mehrere Vorteile. So wird durch die einlaufseitige, in radialer Richtung wirkende Führung des Bremsbelags ein Dreheffekt des Bremsbelags während eines Bremsvorgangs verhindert.

Des Weiteren besteht durch die Asymmetrie die Möglichkeit einer asymmetrischen Anordnung der Reibmasse des Bremsbelags, beispielsweise zur Kompensation von Schrägverschleiß der Reibmasse.

Außerdem ist durch die asymmetrische Gestaltung ein Falscheinbau des Bremsbelags in den Bremsträger quasi ausgeschlossen.

Nachfolgend werden Ausführungsbeispiele der Erfindung anhand der beiliegenden Zeichnungen näher erläutert.

Es zeigen:

| | |
|---|---|
| Figur 1 | eine Seitendraufsicht auf einen in einen Bremsträger gehaltenen Bremsbelag gemäß dem Stand der Technik, |
| Figur 2 | eine Seitenansicht einer ersten Ausführungsvariante eines erfindungsgemäßen Bremsträgers mit darin eingebautem Bremsbelag, |
| Figur 3 | eine Seitenansicht des Bremsträgers und des Bremsbelags aus Figur 2 mit zur Montage oder Demontage verschwenktem Bremsbelag, |
| Figur 4 | eine Seitenansicht des Bremsträgers und des Bremsbelags aus Figur 2 mit schematischer Darstellung der Bremsscheibe und auf verschiedene Punkte des Bremsträgers bzw. des Bremsbelags wirkende Kräfte, |
| Figur 5 | eine Draufsicht auf den Bremsträger und den Bremsbelag aus Figur 2 mit Darstellung der an verschiedenen Punkten angreifenden Kräfte, |
| Figuren 6a, 6b, 6d und 6e | unterschiedliche Ausführungsvarianten der Formgestaltung eines erfindungsgemäßen Bremsbelags, |
| Figur 6c | zeigt eine weitere Variant eines Bremsbelags, |
| Figur 7 | eine perspektivische Ansicht einer zweiten Ausführungsvariante einer erfindungsgemäßen Scheibenbremse, |
| Figur 8 | eine perspektivische Ansicht des Bremsträgers der in Figur 7 gezeigten Ausführungsvariante der Scheibenbremse, |
| Figur 9 | eine perspektivische Ansicht des Bremsbelags der in Figur 7 gezeigten Ausführungsvariante der Scheibenbremse, |
| Figuren 10a bis c | unterschiedliche Ausführungsvarianten der Formgestaltung des Reibbelags eines Bremsbelags und |
| Figuren 11 und 12 | weitere Seitenansichten von Ausführungsvarianten eines Bremsträgers mit darin eingebautem Bremsbelag. |

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Scheibenbremse, der Belagträgerplatte und des Bremsträgers. Diese Begriffe sind nicht einschränkend zu verstehen, das heißt, durch verschiedene Arbeitsstellungen oder die spiegelsymmetrische Auslegung oder dergleichen können sich diese Bezüge ändern.

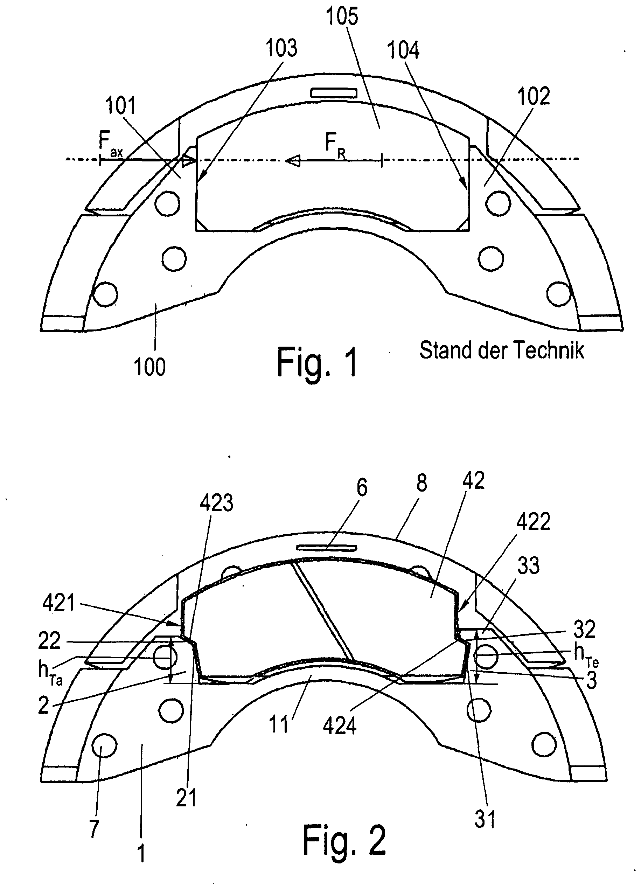

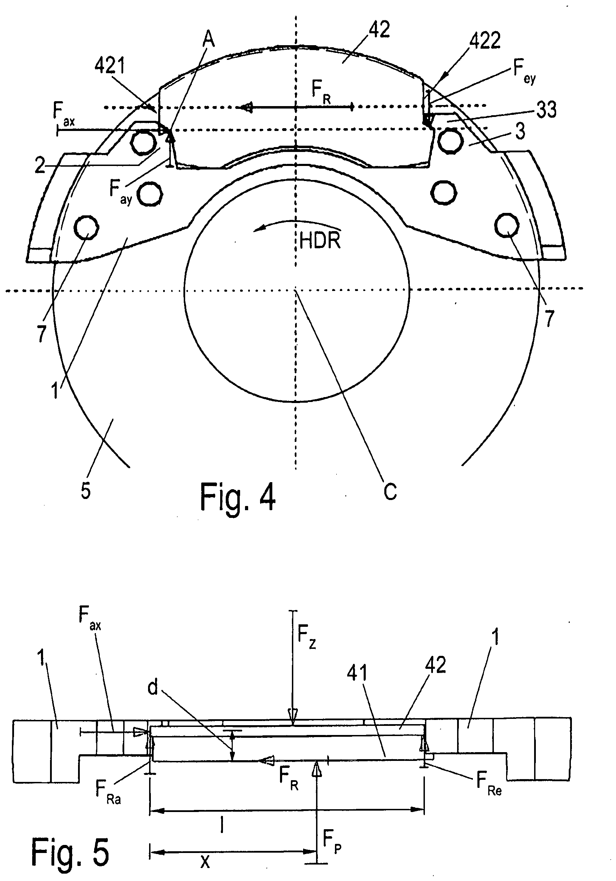

In der Figur 2 ist in schematischer Darstellung ein Ausschnitt einer Scheibenbremse gezeigt. Mit dem Bezugszeichen 42 ist dabei ein Belagträger eines Bremsbelags 4 bezeichnet, auf dessen in Figur 2 nicht zu sehender Rückseite ein Reibbelag 41 (zu erkennen in den Figuren 5, 7 oder 10) festgelegt ist. Der Belagträger 42 des Bremsbelags 4 ist an einem fahrzeugseitig ortsfest montierten Bremsträger 1 montiert und wird bremssattelseitig mit Hilfe eines Belaghaltebügels 6 in dem Bremsträger 1 gehalten.

Der Bremsträger 1 ist dabei als separates Bauteilausgebildet. Zur Befestigung des Bremsträgers 1 an einer Fahrzeugachse ist dieser üblicherweise mit Bohrungen 7 versehen, in die Schrauben oder Bolzen einführbar sind und den Bremsträger an der Fahrzeugachse halten. Denkbar ist auch ein sonstiges Abstützelement zur Halterung und/oder Abstützung des Bremsbelags 4.

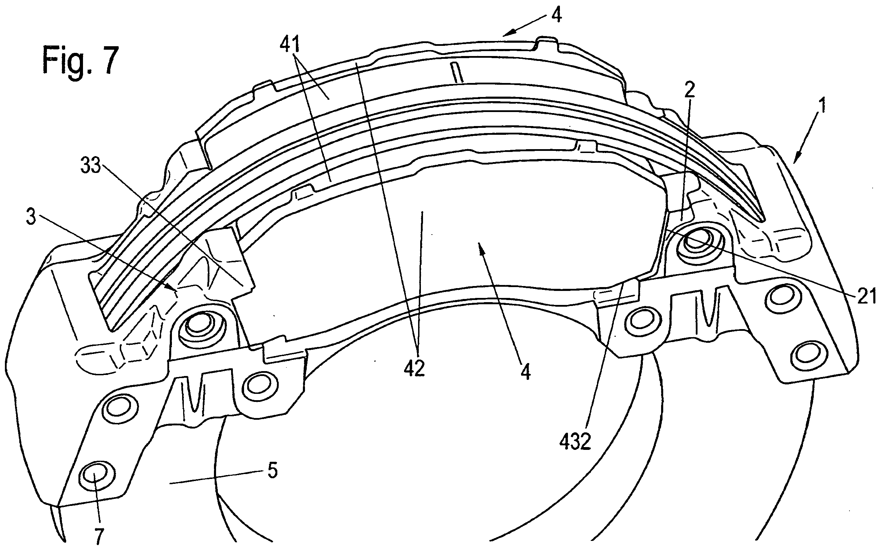

Der Bremsträger 1 überspannt, wie in Figur 4 und 7 gezeigt ist, einen Abschnitt der Bremsscheibe 5 und besteht im Wesentlichen aus zwei durch Brückenteile 11 miteinander verbundene und in einer Ebene parallel zur Bremsfläche der Bremsscheibe 5 hintereinander angeordnete Trägerhörner 2, 3, welche die Belagträgerplatte 42 des Bremsbelags 4 seitlich, d.h. einlaufseitig und auslaufseitig stützen.

Der in Figur 7 gezeigte Bremsträger 1 überspannt die Bremsscheibe sowohl aktions- als auch reaktionsseitig. Denkbar ist auch eine Ausführungsvariante des Bremsträgers zur Halterung nur des aktionsseitigen oder nur des reaktionsseitigen Bremsbelags. Der auf der anderen Seite der Bremsscheibe 5 angeordnete Bremsbelag 4 ist bei dieser Ausführungsvariante vorzugsweise direkt im Bremssattel 8 gehalten.

Die Belagträgerplatte 42 des Bremsbelags 4 liegt dabei im eingesetzten Zustand spielfrei oder nahezu spielfrei in dem durch die Trägerhörner 2, 3 und das diese verbindende Brückenteil 11 gebildeten Belagschacht des Bremsträger 1 ein.

Dabei ist das einlaufseitige Trägerhorn 3 des Bremsträgers 1 im Gegensatz zu den Scheibenbremsen gemäß dem Stand der Technik, wie es in einem Beispiel in Figur 1 gezeigt ist, nicht als Träger 102 mit einer dem Bremsbelag zugewandten geradlinigen Stützfläche 104 ausgebildet, sondern weist eine Hinterschneidung 32 auf, die einen Versatz 424 an der dem einlaufseitigen Trägerhorn 3 des Bremsträgers 1 benachbarten Stützfläche 422 der Belagträgerplatte 42 aufnimmt.

Die Hinterschneidung 32 und der Versatz 424 an der dem einlaufseitigen Trägerhorn 3 des Bremsträgers 1 benachbarten Stützfläche 422 der Belagträgerplatte 42 sind dabei derart geformt, dass der Bremsbelag 4 um eine zur Drehachse C der Bremsscheibe 5 (gezeigt in Figur 4) parallele Schwenkachse entgegen einer Hauptdrehrichtung HDR der Bremsscheibe (5) verschwenkbar ist.

Die Hinterschneidung 32 erstreckt sich dabei als Vorsprung in Richtung der Hauptdrehrichtung HDR der Bremsscheibe 5 und wird von der Belagträgerplatte 42, insbesondere dem oben genannten Versatz 424 an der Einlaufseite untergriffen, dass der Bremsbelag 4 nicht direkt radial relativ zum Bremsscheibenmittelpunkt C aus dem Bremsträger 1 entnehmbar ist.

Das auslaufseitige Trägerhorn 2 des Bremsträgers 1 und die diesem benachbarte Stützfläche 41 der Belagträgerplatte 42 sind entsprechend so geformt, dass der Bremsbelag 4 um die zur Drehachse C der Bremsscheibe 5 parallele Schwenkachse entgegen der Hauptdrehrichtung HDR der Bremsscheibe 5 verschwenkbar ist. Demgemäß wird der Bremsbelag 4 derart in dem Bremsträger 1 gehalten, dass beim Ein- und Ausbau eine Schwenkbewegung oder eine kombinierte Schwenk- und Radialbewegung erforderlich ist, wobei die Radialbewegung beim Ausbau des Bremsbelags 4 nach dem Herausschwenken des Bremsbelags 4 aus der Hinterschneidung 32 bzw. bei Einbau des Bremsbelags 4 vor dem Einschwenken des Bremsbelags 4 in die Hinterschneidung 32 des einlaufseitigen Trägerhorns 3 erfolgt. Dadurch ist ein einfacher Ein- und Ausbau des Bremsbelags 4 aus dem bzw. in den Bremsträger 1 gewährleistet.

Wie in Figur 2 zu erkennen ist, weist die dem auslaufseitigen Trägerhorn 2 des Bremsträgers 1 benachbarte Stützfläche 41 der Belagträgerplatte 42 dazu einen das Trägerhorn 2 zumindest teilweise übergreifenden Versatz 43 auf. Die Anordnung und Ausgestaltung der Versätze 43, 44 der Belagträgerplatte 42 mit dem daran angeordneten Reibbelag 41 sowie der Hinterschneidung 32 des Bremsträgers 1 ist dabei dergestalt, dass sowohl die Belagträgerplatte 42 als auch der Bremsträgers 1 bevorzugt eine asymmetrische Gestalt annehmen, welche sowohl vorteilhaft ist für den Ein- und Ausbau des Bremsbelags als auch zur verbesserten Abstützung des Bremsbelags bzw. der Belagträgerplatte 42 an dem Bremsträger 1.

Die Schwenkachse, um die der Bremsbelag 4 verschwenkbar ist, liegt dabei bevorzugt im Bereich der dem einlaufseitigen Trägerhorn 3 des Bremsträgers 1 benachbarten Stützfläche 422 der Belagträgerplatte 42 nahe einem Kopfbereich 33 des einlaufseitigen Trägerhorns 3, vorzugsweise innerhalb von 20mm um den Kopfbereich 33 des einlaufseitigen Trägerhorns 3.

Bei den Bremsträgern und Belagträgerplatten gemäß dem Stand der Technik ist der Bremsträger 100 (gezeigt in Figur 1) mit jeweiligen einlaufseitigen und auslaufseitigen die Belagträgerplatte 105 stützende Trägerhörner 101, 102 ausgebildet. Zum Ein- oder Ausbau der Belagträgerplatte 105 wird diese senkrecht in die Lücke zwischen den beiden Trägerhörnern 101, 102 eingeschoben, wobei die Trägerhörner 101, 102 sich bis zum radial außen liegenden Rand oder nahezu bis zum Rand des Belaghalteträgers 105 erstrecken. Dabei sind sowohl die Innenflächen der Trägerhörner 101, 102 als auch die diesen benachbarten Stützflächen 103, 104 der Trägerplatte 105 als ebene Flächen ausgebildet. Insbesondere das auslaufseitige Trägerhorn 101 muss dabei eine hohe Konzentration am oberen Ende verkraften, was mit einer sehr hohen Beanspruchung und Verformung des Trägerhorns sowie mit einer ungünstigen Kraftverteilung im Bremsträger 100 und dem Belaghalteträger 105 des Bremsbelags einhergeht.

Demgegenüber ist, wie in den Figuren 2, 3 und 4 gezeigt ist, insbesondere das auslaufseitige Trägerhorn 2 abgesenkt bzw. flacher ausgebildet, so dass sich ein oberer Abstützpunkt A des Belaghalteträgers 42 am auslaufseitigen Trägerhorn 2 nicht am oberen Ende der Stützfläche 421, sondern vorzugsweise etwa in der Mitte der Stützfläche 421 vorgesehen ist. Dadurch greift bei einem Bremsvorgang am Belaghalteträger 42 des Bremsbelags 4 ein definiertes Drehmoment um die Z-Achse an. Durch dieses Drehmoment wird auch am einlaufseitigen Trägerhorn 3 eine auf die Hinterschneidung 32 und den Versatz 424 wirkende Abstützkraft erzeugt und somit auch die Einlaufseite des Bremsträgers 1 in den Kraftfluss während eines Bremsvorgangs mit einbezogen.

Das auslaufseitige Trägerhorn 2 und das einlaufseitige Trägerhorn 3 weisen am Fuß des jeweiligen Trägerhorns eine Stützfläche 21, 31 auf, welche parallel zueinander oder bevorzugt, wie in Figur 2 dargestellt, unter spitzem Winkel gegenüber einer zur y-Achse des weiter unten definierten Koordinatensystems parallelen Geraden auseinander laufen.

Die Länge dieser den Belaghalteträger 4 seitlich teilweise einfassenden Stützflächen 21, 31 beträgt dabei vorzugsweise etwa die Hälfte oder weniger als die Höhe $h_B$ der Belagträgerplatte 42, um zum einen das Einschwenken bzw. Ausschwenken der Belagträgerplatte 42 in den bzw. aus dem Bremsträger 1 zu ermöglichen und zum anderen das am auslaufseitigen Trägerhorn 2 während eines Bremsvorgangs angreifende Drehmoment möglichst klein zu halten.

Oberhalb der Stützfläche 21 des auslaufseitigen Trägerhorns 2 kippt die Stützfläche 21 von der Belagträgerplatte 42 weg zu einer Schrägfläche 22, entsprechend der Ausgestaltung des Versatzes 43 an der Stützfläche 41 der Belagträgerplatte 4.

Oberhalb der Stützfläche 31 des einlaufseitigen Trägerhorns 2 kippt die Stützfläche von der Belagträgerplatte 42 unter Ausbildung der Hinterschneidung 32 nach innen weg, entsprechend der Ausgestaltung des Versatzes 44 an der einlaufseitigen Stützfläche 42 der Belagträgerplatte 4.

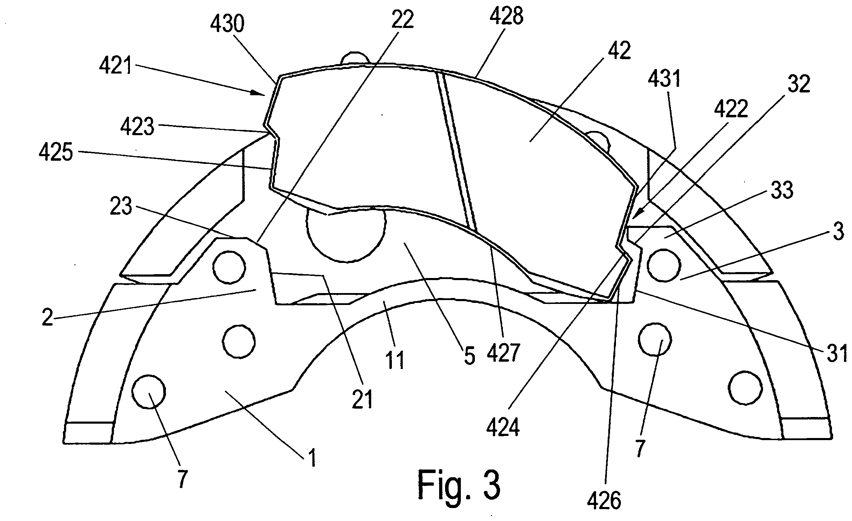

In Figur 3 ist die einfach Montage bzw. Demontage der Belagträgerplatte 42 in oder aus dem Bremsträger 1 gezeigt. Wie hier gut zu erkennen ist, kann durch eine einfache Schwenkbewegung die Belagträgerplatte 42 aus dem Eingriff mit der Hinterschneidung 32 am Kopf 33 des einlaufseitigen Trägerhorns 3 gebracht werden.

In Figur 4 sind zusätzlich zu den Bauteilen Kräfte darstellende Pfeile der an verschiedenen Punkten der Bauteile angreifenden Kräfte dargestellt. Mit C ist hier die Drehachse der Bremsscheibe 5 bezeichnet, welche gleichzeitig als Z-Achse eines kartesischen Koordinatensystems definiert ist. Als X-Achse und Y-Achse dieses Koordinatensystems dient die waagerecht gestrichelte Linie (X-Achse) und die senkrechte gestrichelte Linie (Y-Achse), welche sich in C orthogonal kreuzen.

Betrachtet man das Kräfte- und Momentengleichgewicht am Bremsbelag um die Z-Achse in einem Punkt A am Berührungspunkt des auslaufseitigen Trägerhorns 2 mit dem Übergangspunkt der Stützfläche 21 zum Versatz 22 der Belagträgerplatte 42, so ergeben sich folgende Gleichungen:

$$\sum M_{(A)} = 0 = F_{ey} \cdot l - F_R \cdot h$$

$$\sum F_{(x)} = F_{ax} - F_R$$

$$\sum F_{(y)} = F_{ay} - F_{ey} \Rightarrow F_{ey} = F_{ay}$$

$F_{ey}$: Reaktionskraft einlaufseitig,
l: Belaglänge,
$F_R$: Reibkraft des Bremsbelags,
H: Abstand der Kraftwirkungslinie zur Belagabstützung
$F_{ax}$: Belagabstützkraft
$F_{ay}$: Reaktionskraft auslaufseitig

Wichtig ist, dass durch die erfindungsgemäße Formung der Trägerhörner 2, 3 und der Stützfläche 41, 42 der Belagträgerplatte 42 nicht mehr nur das auslaufseitige Trägerhorn 2, sondern auch das einlaufseitige Trägerhorn 3 zur Abstützung der Belagträgerplatte 42 bei einem Bremsvorgang beisteuert.

Betreffend die Kräfte und Momente am Bremsbelag um die Hochachse (y-Achse) bei Verschiebung des Bremsbelags unter Krafteinwirkung in x-Richtung, dargestellt in Figur 5, gelten die folgenden Gleichungen:

$$1. \quad \sum F_{(z)} = 0 = F_{Ra} - F_z + F_P + F_{Re}$$

$$2. \quad \sum F_{(x)} = 0 = F_{ax} - F_R$$

$$3. \quad \sum M_{(A)} = 0 = F_R \cdot d - F_P \cdot x - F_{Re} \cdot I + F_z \cdot \frac{I}{2}$$

$F_Z$: Zugspannkraft
$F_P$: Belaganpresskraft an die Bremsscheibe
$F_{Ra}$: Reibkraft auslaufseitig
$F_{Re}$: Reibkraft einlaufseitig
d: Belagstärke
x: Abstand der Zuspannkraftwirkungslinie

Für die Asymmetrie der Kraftwirkung am Bremsbelag bzw. der Belagträgerplatte 42 gilt somit:

$$x = \frac{F_z \cdot \frac{I}{2} - F_{Re} \cdot I + F_R \cdot d}{F_P}$$

Für $F_{Re} = 0$ (Reibkraft einlaufend) und $F_{Ra} = 0$ (Reibkraft auslaufend) sowie d = 0 (Belagreibkraft und Abstützkraft auf der gleichen Ebene) gilt:

$$F_z = F_P$$

$$\text{aus Gl.1} \quad x = \frac{F_z \cdot \frac{I}{2}}{F_z} \quad \Rightarrow \quad x = \frac{I}{2} \quad \text{(Idealzustand, da gleichmäßige Kraftverteilung im Belag)}$$

Für einen herkömmlichen Bremsbelag ohne Reibkraft am einlaufseitigen Bremsbelagträgerhorn gilt:

$$x = \frac{F_z \cdot \frac{I}{2} + F_R \cdot d}{F_P}$$

Für einen Bremsbelag 4 mit Reibkraft am einlaufseitigen Bremsträgerhorn 3 gilt die vorher hergeleitete Beziehung:

$$x = \frac{F_z \cdot \frac{I}{2} - F_{Re} \cdot I + F_R \cdot d}{F_P}$$

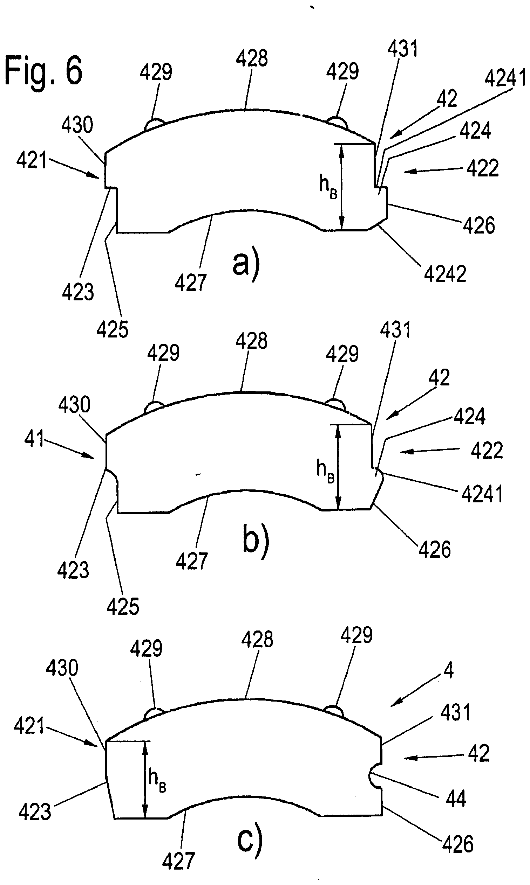

Ein Bremsträger 1 mit einer Reibkraft am einlaufseitigen Bremsträgerhorn 3 hat somit eine um den Term ($F_{Re}$ 1) günstigere Kraftverteilung als ein Bremsbelag ohne einlaufseitige Reibkraft.
Durch die Versätze 423, 424 an den Stützflächen 421, 422 der Belagträgerplatte 42 und die Hinterschneidung 32 am einlaufseitigen Trägerhorn 3 kann die Belagträgerplatte 42 spielfrei oder nahezu spielfrei in den Bremsträger 1 eingelegt werden.
Denkbar sind auch weitere in den Figuren 6a bis 6e beispielhaft gezeigte Ausführungsvarianten der Belagträgerplatte 42 und entsprechender Formgestaltungen der Trägerhörner 2, 3 des Bremsträgers 1
So ist in Figur 6a an der Belagträgerplatte jeweils einlaufseitig und auslaufseitig ein rechteckiger Versatz mit parallel zur X-Achse verlaufenden Stützflächen 423, 424 angeformt, wobei die einlaufseitige Fläche 4241 des Versatzes 424 an einer entsprechend ausgerichteten Hinterschneidung 32 des einlaufseitigen Trägerhorns 3 sich abstützt und die auslaufseitige Stützfläche 423 auf dem auslaufseitigen Trägerhorn 2 aufliegt.

Bei der in Figur 6b gezeigten Ausführungsvariante sind die Versätze 423, 424 als Rundungen geformt, welche sich an entsprechend geformten Hinterschneidungen des einlaufseitigen Trägerhorns 3 und einer entsprechend geformten Auflagefläche 22 des auslaufseitigen Trägerhorns 2 aufstützt.

Bei der in der Figur 6c gezeigten Ausführungsvariante ist auf der Einlaufseite 422 der Versatz 424 als halbkreisförmige Ausbuchtung geformt. Die Einlaufseite 421 der Belagträgerplatte 42 ist in Form zweier winklig zueinander verlaufender geradliniger Flächen zur Abstützung auf dem auslaufseitigen Trägerhorn 2 geformt.

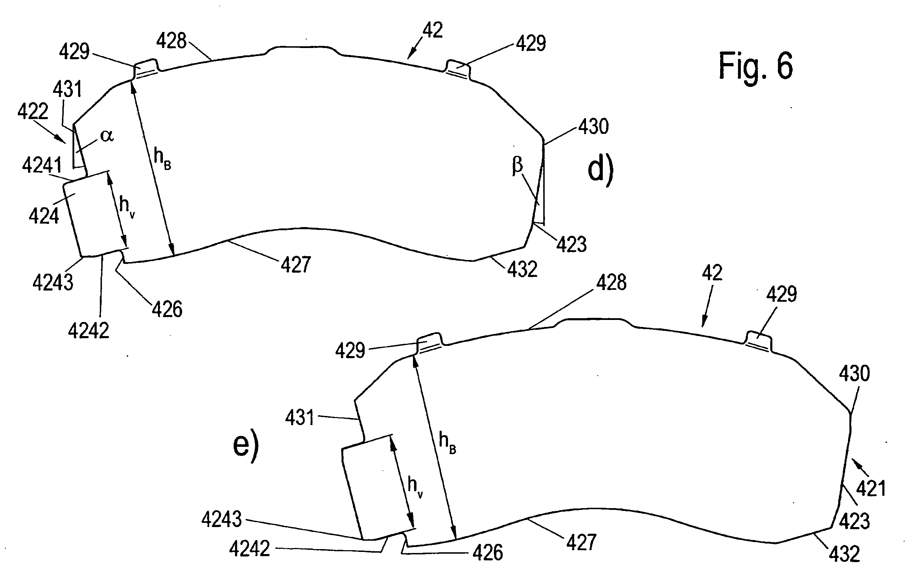

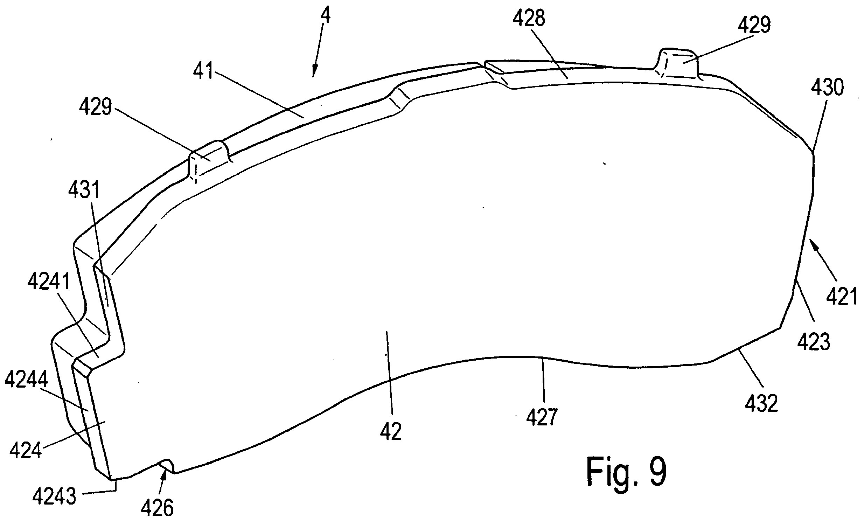

Die in den Figuren 6d, 6e und 9 gezeigte Belagträgerplatte 4 zeichnet sich dadurch aus, dass einlaufseitig ein rechteckiger Versatz 424 an einer unter spitzem Winkel $\alpha$ nach außen überhängenden Seitenfläche 422 angeordnet ist, der in eine entsprechend geformte Hinterschneidung 32 des einlaufseitigen Trägerhorns 3 einschwenkbar ist. Dabei ist die Höhe $h_v$ des Versatzes 424 der Figur 6d geringer als die Höhe $h_v$ des Versatzes 424 der Figur 6e. Auslaufseitig ist die Seitenfläche 421 der Belagträgerplatte 4 mittig als nach außen unter spitzem Winkel $\beta$ überhängende Seitenfläche 423 ausgebildet.

Bevorzugt sind zur besseren Einschwenkbarkeit der Belagträgerplatte 4 in die Hinterschneidung 32 des einlaufseitigen Trägerhorns 3 der an die Oberseite 428 angrenzende Randbereich 430 und der an die Unterseite 427 der Belagträgerplatte 4 angrenzende Randbereich 432 leicht abgeflacht ausgebildet.

Ebenso ist eine (im eingebauten Zustand des Bremsbelags 4) in Richtung der Drehachse der Bremsscheibe 5 weisende Teilfläche 4242 des rechteckigen Versatzes 424 mit einer Abplattung 4243 versehen, um die Schwenkbewegung des Bremsbelags 4 aus dem Eingriff mit dem Bremsträger 1 zu erleichtern.

Der Versatz 424 ist dabei gemäß einer bevorzugten Ausführungsvariante einstückig an der Belagträgerplatte 42 angeformt. Alternativ ist auch denkbar, den Versatz 424 an der Belagträgerplatte 42 als separates Bauteil zu befestigen.

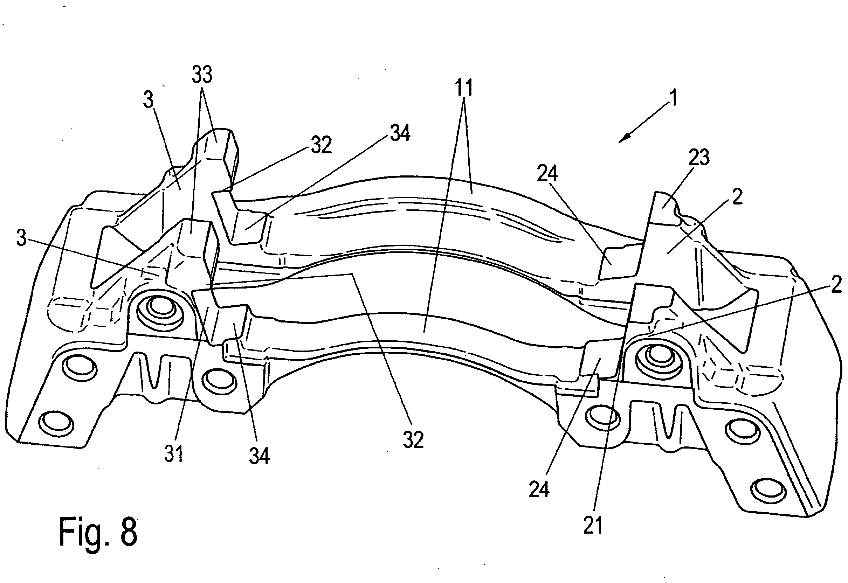

Figur 7 zeigt eine Ausführungsvariante des zu den in den Figuren 6d und 6e gezeigten Bremsbelägen 4 passenden Bremsträgers 1 mit zwei in den Bremsträger 1 eingesetzten Bremsbelägen 4. Der Bremsträger 1 ohne die Bremsbeläge ist in Figur 8 dargestellt. Gut zu erkennen ist die asymmetrische Bauweise der Bremsbeläge und die Ausgestaltung der die Bremsbeläge 4 aufnehmenden Bestandteile des Bremsträgers 1, insbesondere der Kopf 33 des einlaufseitigen Trägerhorns 3 sowie die zueinander v-förmige Spreizung der durch die Trägerhörner 2, 3 gebildeten Bremsbelagschacht des Bremsträgers.

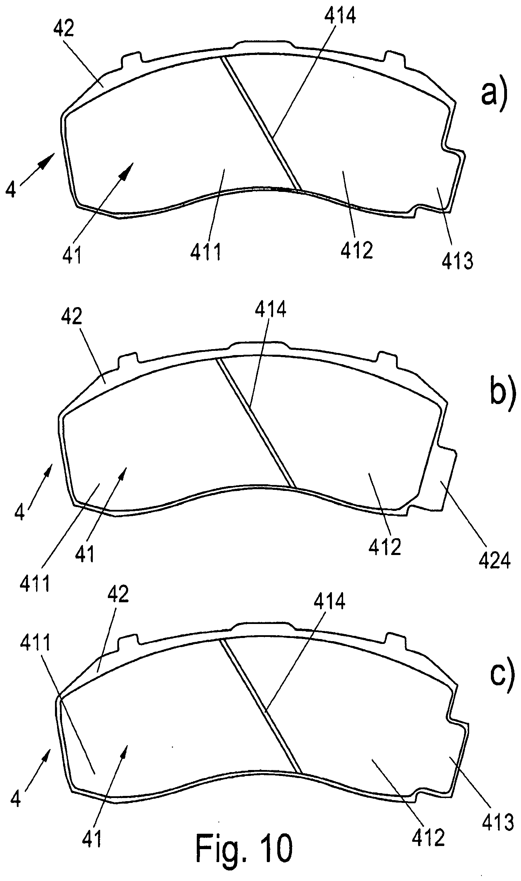

Der an den Bremsbelägen 4 angeordnete Reibbelag 41 ist bevorzugt entsprechend der asymmetrischen Gestaltung der Belagträgerplatte 42 geformt, wie in Figur 10 a und 10c gezeigt ist. Das den Versatz 424 der Belagträgerplatte 42 bedeckende Teilstück 413 des bevorzugt in zwei Teilstücke 411, 412 unterteilten Reibbelags 41 ist dabei vorzugsweise einstückig mit einem der Teilstücke 412 ausgebildet, kann aber auch bei einer Ausführungsvariante des Bremsbelags mit separat ausgebildetem Versatz 424 mit dem Versatz 424 zusammen an den Bremsbelag montiert werden. Denkbar ist auch, an dem Versatz 424 keinen Reibbelag anzubringen, wie es in Figur 10b gezeigt ist.

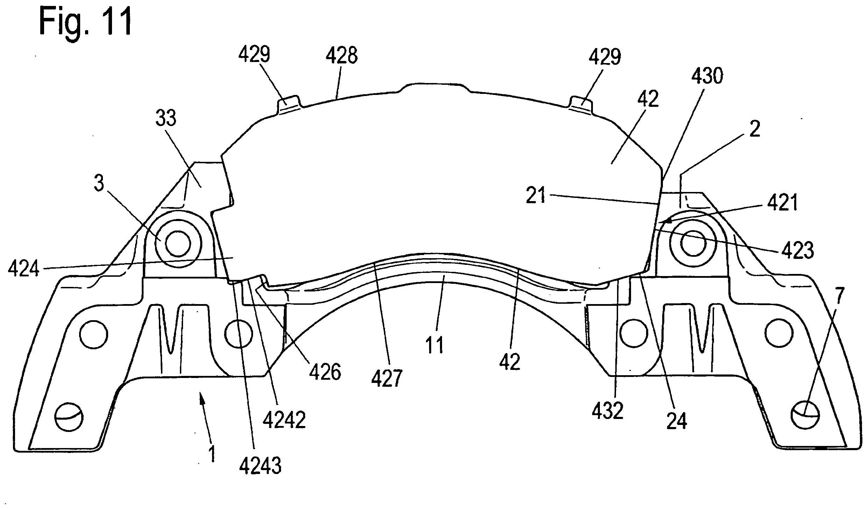

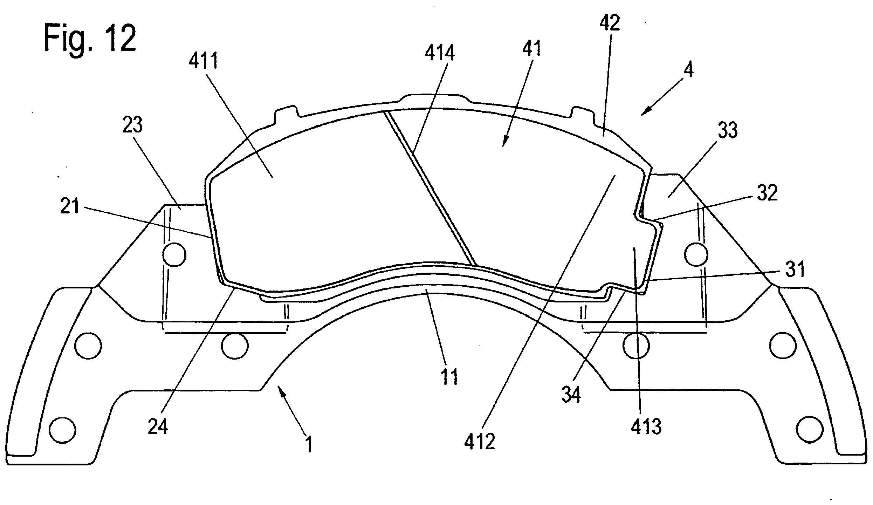

Die Figuren 11 und 12 zeigen Seitendraufsichten des in Figur 7 gezeigten Bremsträgers 1 und des Bremsbelags 4, einmal mit Darstellung der Belagträgerplatte 42 des Bremsbelags (Figur 11) und im anderen Fall mit Darstellung des Reibbelags 41 des Bremsbelags (Figur 12). Gut zu erkennen ist auch hier, dass das auslaufseitige Trägerhorn 2 gegenüber dem einlaufseitigen Trägerhorn 3 des Bremsträgers 1 asymmetrisch zu einer den Bremsbelag 4 mittig durchschneidenden und durch die Drehachse C der Bremsscheibe 5 verlaufenden Spiegelachse ausgebildet ist.

Mit den erfindungsgemäß geformten Belagträgerplatten 4 und Bremsträgern 1 wird somit eine Verbesserung der Kraftverteilung durch eine ein- wie auslaufseitige reibschlüssige Abstützung erreicht. Des Weiteren erfolgt eine gleichmäßigere Einleitung der bei einem Bremsvorgang von dem Bremsbelag 4 in dem Bremsträger 1 übertragenen Kräfte, was mit einer gleichmäßigeren Beanspruchung des Bremsträgers 1 bzw. des Bremssattels und der Befestigungselemente der Bremse an der den Bremsträger 1 tragenden Achse einhergeht. Überdies wird auch eine Verminderung von Klappergeräuschen durch eine engere radiale Führung des Bremsbelags 4 im Bremsträger 1 erreicht.

## Bezugszeichenliste

1   Bremsträger
11  Brückenteil

2   Trägerhorn
21  Stützfläche
22  Auflagefläche
23  Oberseite

| | |
|---|---|
| 24 | Stützflache |
| | |
| 3 | Trägerhorn |
| 31 | Stützfläche |
| 32 | Hinterschneidung |
| 33 | Kopf |
| 34 | Stützfläche |
| | |
| 4 | Bremsbelag |
| 41 | Reibbelag |
| 42 | Belagträgerplatte |
| 421 | Stützfläche |
| 422 | Stützfläche |
| 423 | Versatz |
| 424 | Versatz |
| 4241 | Oberseite |
| 4242 | Unterseite |
| 4243 | Abflachung |
| 4244 | Seitenfläche |
| 425 | Stützfläche |
| 426 | Stützfläche |
| 427 | Unterkante |
| 428 | Oberkante |
| 429 | Ansatz für Belaghaltefeder |
| 430 | Randbereich |
| 431 | Stützfläche |
| 432 | Stützfläche |
| | |
| 5 | Bremsscheibe |
| 6 | Belaghaltebügel |
| 7 | Bohrung |
| 8 | Bremssattel |
| | |
| 100 | Bremsträger |
| 101 | Trägerhorn |
| 102 | Trägerhorn |
| 103 | Stützfläche |
| 104 | Stützfläche |
| 105 | Belagträgerplatte |
| | |
| C | Drehachse, Koordinatenzentrum |
| A | Kraftansatzpunkt |
| HDR | Hauptdrehrichtung der Bremsscheibe |
| $h_B$ | Höhe der Belaghalteplatte |
| $h_{Te}$ | Höhe des einlaufseitigen Trägerhorns |
| $h_{Ta}$ | Höhe des auslaufseitigen Trägerhorns |

**Patentansprüche**

1. Scheibenbremse eines Kraftfahrzeugs, insbesondere eines Nutzfahrzeugs, aufweisend einen eine Bremsscheibe (5) übergreifenden Bremssattel (8) mit einem als separates Bauteil zum Bremssattel ausgebildeten fahrzeugseitig ortsfesten Bremsträger (1), in dem mindestens ein mit einer Belagträgerplatte (42) und einem daran befestigten Reibbelag (41) versehener Bremsbelag (4) geführt ist, wobei der Bremsträger (1) in einer Hauptdrehrichtung (HDR) der Bremsscheibe (5) einlaufseitig und auslaufseitig die Belagträgerplatte (42) des Bremsbelags (4) stützende Trägerhörner (2, 3) aufweist, wobei das einlaufseitige Trägerhorn (3) des Bremsträgers (1) und die diesem benachbarte Stützfläche (422) der Belagträgerplatte (42) formschlüssig ineinander greifen, **dadurch gekennzeichnet, dass** das auslaufseitige Trägerhorn (2) gegenüber dem einlaufseitigen Trägerhorn (3) abgesenkt ausgebildet ist.

**2.** Scheibenbremse nach Anspruch 1, **dadurch gekennzeichnet, dass** die dem einlaufseitigen Trägerhorn (3) des Bremsträgers (1) benachbarte Stützfläche (422) der Belagträgerplatte (42) einen Versatz (424) aufweist, der in eine dem Versatz (424) entsprechende Hinterschneidung (32) am einlaufseitigen Trägerhorn (3) eingreift.

**3.** Scheibenbremse nach Anspruch 2, **dadurch gekennzeichnet, dass** die Hinterschneidung (32) sich als Vorsprung in Richtung der Hauptdrehrichtung (HDR) der Bremsscheibe (5) erstreckt und von der Belagträgerplatte (42) einlaufseitig untergriffen wird, derart, dass der Bremsbelag (4) nicht direkt radial relativ zum Bremsscheibenmittelpunkt (C) aus dem Bremsträger (1) entnehmbar Ist.

**4.** Scheibenbremse nach Anspruch 3, **dadurch gekennzeichnet, dass** die Hinterschneidung (32) sich als Vorsprung in Richtung der Hauptdrehrichtung (HDR) der Bremsscheibe (5) erstreckt und von der Belagträgerplatte (42) nur einlaufseitig untergriffen wird, derart, dass der Bremsbelag (4) nicht direkt radial relativ zum Bremsscheibenmittelpunkt (C) aus dem Bremsträger (1) entnehmbar ist.

**5.** Scheibenbremse nach einem der vorstehenden Ansprüche, **dadurch gekennzeichnet, dass** der Bremsbelag (4) derart in dem Bremsträger (1) gehalten, dass beim Ein-und Ausbau eine Schwenkbewegung oder eine kombinierte Schwenk- und Radialbewegung erforderlich ist.

**6.** Scheibenbremse nach einem der Ansprüche 2 bis 5, **dadurch gekennzeichnet, dass** der Versatz (424) der dem einlaufseitigen Trägerhorn (3) des Bremsträgers (1) benachbarten Stützfläche (422) der Belagträgerplatte (42) derart geformt ist, dass der Bremsbelag (4) um eine zur Drehachse (C) der Bremsscheibe (5) parallele Schwenkachse entgegen der Hauptdrehrichtung (HDR) der Bremsscheibe (5) verschwenkbar ist.

**7.** Scheibenbremse nach einem der vorstehenden Ansprüche, **dadurch gekennzeichnet, dass** das auslaufseitige Trägerhorn (2) des Bremsträgers (1) und die diesem benachbarte Stützfläche (421) der Belagträgerplatte (42) derart geformt sind, dass der Bremsbelag (4) um eine zur Drehachse (C) der Bremsscheibe (5) parallele Schwenkachse entgegen der Hauptdrehrichtung der Bremsscheibe (5) verschwenkbar ist.

**8.** Scheibenbremse nach einem der vorstehenden Ansprüche, **dadurch gekennzeichnet, dass** die Schwenkachse, um die der Bremsbelag (4) verschwenkbar ist, im Bereich der dem einlaufseitigen Trägerhorn (3) des Bremsträgers (1) benachbarten Stützfläche (422) der Belagträgerplatte (42) nahe einem Kopfbereich (33) des einlaufseitigen Trägerhorns (3) liegt.

**9.** Scheibenbremse nach einem der vorstehenden Ansprüche, **dadurch gekennzeichnet, dass** die dem auslaufseitigen Trägerhorn (2) des Bremsträgers (1) benachbarte Stützfläche (421) der Belagträgerplatte (42) einen das Trägerhorn (2) zumindest teilweise übergreifenden Versatz (423) aufweist.

**10.** Scheibenbremse nach einem der vorhergehenden Ansprüche, **dadurch gekennzeichnet, dass** das auslaufseitige Trägerhorn (2) gegenüber dem einlaufseitigen Trägerhorn (3) asymmetrisch zu einer den Bremsbelag (4) mittig durchschneidenden und durch die Drehachse (C) der Bremsscheibe verlaufenden Spiegelachse ausgebildet ist.

**11.** Scheibenbremse nach einem der vorhergehenden Ansprüche, **dadurch gekennzeichnet, dass** die Belagträgerplatte (42) spielfrei oder nahezu spielfrei in dem Bremsträger (1) einliegt.

**12.** Scheibenbremse nach einem der vorhergehenden Ansprüche, **dadurch gekennzeichnet, dass** das einlaufseitige Trägerhorn (3) ein Kopfstück (33) aufweist, das den Versatz (424) an der dem einlaufseitigen Trägerhorn (3) benachbarten Stützfläche (422) der Belagträgerplatte (42) übergreift.

**13.** Scheibenbremse nach einem der vorhergehenden Ansprüche, **dadurch gekennzeichnet, dass** die Länge der den Bremsbelag (4) seitlich teilweise einfassenden Stützflächen (21, 31) der Trägerhörner (3) die Hälfte der Höhe $h_B$ der Belagträgerplatte (42) beträgt.

**Claims**

**1.** Disc brake of a motor vehicle, in particular of a commercial vehicle, comprising a brake calliper (8) which encompasses a brake disc (5) and comprising an adapter (1) which is designed as a component separated to the brake calliper, is fixed in a static manner to the vehicle, in which adapter is guided at least one brake pad (4) which is provided with a backing plate (42) and with a friction lining (41) fastened thereto, wherein the adapter (1) has adapter lugs (2, 3) which support the backing plate (42) of the brake pad (4) at the entry side and exit side in a main direction of rotation (HDR) of the brake disc (5), wherein the entry-side adapter lug (3) of the adapter (1) and the adjacent support surface (422) of the backing plate (42) are in positive engagement with one another, **characterised in that** the exit-side adapter lug (2) is lowered relative to the entryside adapter lug (3).

2. Disc brake according to claim 1, **characterised in that** the support surface (422) of the backing plate (42) which is adjacent to the entry-side adapter lug (3) has an offset (424) which engages with a counterdraft (32) corresponding to the offset (424) on the entryside adapter lug (3).

3. Disc brake according to claim 2, **characterised in that** the counterdraft (32) extends as a projection towards the main direction of rotation (HDR) of the brake disc (5) and is engaged by the backing plate (42) from below on the entry side in such a way that the brake pad (4) cannot be removed from the adapter (1) radially relative to the brake disc centre (C).

4. Disc brake according to claim 3, **characterised in that** the counterdraft (32) extends as a projection towards the main direction of rotation (HDR) of the brake disc (5) and is engaged by the backing plate (42) from below on the entry side only in such a way that the brake pad (4) cannot be removed from the adapter (1) radially relative to the brake disc centre (C).

5. Disc brake according to claim 3, **characterised in that** the brake pad (4) is held in the adapter (1) in such a way that, during installation and removal, a pivoting movement or a combined pivoting and radial movement is required.

6. Disc brake according to any of claims 2 to 5, **characterised in that** the offset (424) of that support surface (422) of the backing plate (42) which is adjacent to the entry-side adapter lug (3) of the adapter (1) is shaped such that the brake pad (4) is pivotable about a pivot axis, which is parallel to the axis of rotation (C) of the brake disc (5), counter to the main direction of rotation (HDR) of the brake disc (5).

7. Disc brake according to any of the preceding claims, **characterised in that** the entry-side adapter lug (3) of the adapter (1) and the support surface (421), which is adjacent thereto, of the backing plate (42) are shaped such that the brake pad (4) is pivotable about a pivot axis, which is parallel to the axis of rotation (C) of the brake disc (5), counter to the main direction of rotation of the brake disc (5).

8. Disc brake according to any of the preceding claims, **characterised in that** the pivot axis about which the brake pad (4) is pivotable is situated in the region of that support surface (422) of the backing plate (42) which is adjacent to the entry-side adapter lug (3), close to a head region (33) of the entry-side adapter lug (3).

9. Disc brake according to any of the preceding claims, **characterised in that** the support surface (421) of the backing plate (42) which is adjacent to the exit-side adapter lug (2) of the adapter (1) has an offset (423) which engages the adapter lug (2) at least partially from above.

10. Disc brake according to any of the preceding claims, **characterised in that** the exit-side adapter lug (2) is formed so as to be asymmetrical with respect to the entry-side adapter lug (3) about a mirror axis which extends centrally through the brake pad (4) and which runs through the axis of rotation (C) of the brake disc.

11. Disc brake according to any of the preceding claims, **characterised in that** the backing plate (42) lies in the adapter (1) without play or almost without play.

12. Disc brake according to any of the preceding claims, **characterised in that** the entry-side adapter lug (3) has a head piece (33) which engages the offset (424) on that support surface (422) of the backing plate (42) which is adjacent to the entry-side adapter lug (3) from above.

13. Disc brake according to any of the preceding claims, **characterised in that** the length of the support surfaces (21, 31), which laterally partially enclose the brake pad (4), of the entry-side adapter lug (3) amounts to half of the height hB of the backing plate (42).

**Revendications**

1. Frein à disque d'un véhicule automobile, notamment d'un véhicule utilitaire, ayant un étrier (8) de frein recouvrant un disque (5) de frein avec un support (1) de frein à poste fixe du côté du véhicule, réalisé comme composant séparé de l'étrier de frein, dans lequel est guidée au moins une garniture (4) de frein pourvue d'une plaque (42) de support de garniture et d'une garniture de friction qui y est fixée, le support (1) de frein ayant, dans une direction (HDR) de rotation principale du disque (5) de frein du côté de l'entrée et du côté de la sortie, des cornes (2, 3) de support appuyant la plaque (42) de support de garniture de la garniture (4) de frein, la corne de support du côté de l'entrée du support (1) de frein et la surface (422) d'appui, qui en est voisine, de la plaque (42) de support de garniture s'interpénétrant à complémentarité de forme, **caractérisé en ce que** la corne (2) du côté de la sortie est constituée de manière abaissée par rapport à la corne (3) de support du côté de l'entrée.

2. Frein à disque suivant la revendication 1, **caractérisé en ce que** la surface (422) d'appui, voisine de la corne (3) de support du côté de l'entrée du support (1) de frein, de la plaque (42) de support de garniture a un décalage (424), qui pénètre dans une contredépouille (32), correspondant au décalage (424), à la corne (3) de support du côté de l'entrée.

3. Frein à disque suivant la revendication 2, **caractérisé en ce que** la contredépouille (32) s'étend sous la forme d'une saillie en direction de la direction (HDR) de rotation principale du disque (5) de frein et est accrochée par en dessous du côté de l'entrée par la plaque (42) de support de garniture, de manière à ce que la garniture (4) de frein ne puisse pas être enlevée du support (1) de frein directement radialement par rapport au centre (C) du disque de frein.

4. Frein à disque suivant la revendication 3, **caractérisé en ce que** la contredépouille (32) s'étend sous la forme d'une saille dans la direction de la direction (HDR) de rotation principale du disque (5) de frein et est prise par en dessous par la plaque (42) de support de garniture seulement du côté de l'entrée, de manière à ce que la garniture (4) de frein ne puisse pas être retirée du support (1) de frein directement radialement par rapport au centre (C) du disque de frein.

5. Frein à disque suivant l'une des revendications précédentes, **caractérisé en ce que** la garniture (4) de frein est maintenue dans le support (1) de frein, de manière à ce que, au montage et au démontage, un mouvement de pivotement ou un mouvement combiné de pivotement et radial soit nécessaire.

6. Frein à disque suivant l'une des revendications 2 à 5, **caractérisé en ce que** le décalage (424) de la surface (422) d'appui, voisine de la corne (3) de support du côté de l'entrée du support (1) de frein, de la plaque (42) de support de garniture est conformé de manière à ce que la garniture (4) de frein puisse pivoter dans le sens contraire à la direction (HDR) de rotation principale du disque (5) de frein autour d'un axe de pivotement parallèle à l'axe (C) de rotation du disque (5) de frein.

7. Frein à disque suivant l'une des revendications précédentes, **caractérisé en ce que** la corne (2) de support du côté de la sortie du support (1) de frein et la surface (421) d'appui, qui en est voisine, de la plaque (42) de support de la garniture sont conformées de manière à ce que la garniture (4) de frein puisse pivoter dans le sens contraire à la direction de rotation principale du disque (5) de frein autour d'un axe de pivotement parallèle à l'axe (C) de rotation du disque (5) de frein.

8. Frein à disque suivant l'une des revendications précédentes, **caractérisé en ce que** l'axe de pivotement, autour duquel la garniture (4) de frein peut pivoter, se trouve dans la partie de la surface (422) d'appui, voisine de la corne (3) de support du côté de l'entrée du support (1) de frein, de la plaque (42) de support de la garniture à proximité d'une partie (33) de tête de la corne (3) de support du côté de l'entrée.

9. Frein à disque suivant l'une des revendications précédentes, **caractérisé en ce que** la surface (421) d'appui, proche de la corne (2) de support du côté de la sortie du support (1) de frein, de la plaque (42) de support de la garniture a un décalage (423) recouvrant, au moins en partie, la corne (2) du support.

10. Frein à disque suivant l'une des revendications précédentes, **caractérisé en ce que** la corne (2) du support du côté de la sortie est, par rapport à la corne (3) du support du côté de l'entrée, constituée dissymétriquement par rapport à un axe de symétrie comme en un miroir coupant au milieu la garniture (4) de frein et passant par l'axe (C) de rotation du disque de frein.

11. Frein à disque suivant l'une des revendications précédentes, **caractérisé en ce que** la plaque (42) de support de la garniture pénètre, sans jeu ou presque sans jeu, dans le support (1) de frein.

12. Frein à disque suivant l'une des revendications précédentes, **caractérisé en ce que** la corne (3) de support du côté de l'entrée a une pièce (33) de tête, qui recouvre le décalage (424) sur la surface (422) d'appui, voisine de la corne (3) de support du côté de l'entrée, de la plaque (42) de support de la garniture.

13. Frein à disque suivant l'une des revendications précédentes, **caractérisé en ce que** la longueur des surfaces (21, 31) d'appui, enserrant partiellement latéralement la garniture (4) de frein de la corne (3) de support, représente la moitié de la hauteur (HB) de la plaque (42) de support de la garniture.

Fig. 1

Stand der Technik

Fig. 2

Fig. 3

Fig. 4

Fig. 5

Fig. 6

a)

b)

c)

Fig. 6

Fig. 7

EP 2 570 689 B2

Fig. 8

Fig. 9

EP 2 570 689 B2

Fig. 10

Fig. 11

EP 2 570 689 B2

Fig. 12

EP 2 570 689 B2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2056602 A
- EP 0641949 A1
- EP 1637759 A1